# EUROPEAN PATENT APPLICATION

(11) **EP 1 557 748 A2**
(43) Date of publication of application: **27.07.2005**
(21) Application number: 05000020.7
(22) Date of filing: 03.01.2005
(51) Int. Cl.: G06F 3/12

(54) **Image conversion apparatus, and image conversion program storage medium**

(30) Priority: 22.01.2004 JP 2004014438
(71) Applicant: Fuji Photo Film Co. Ltd., Kanagawa 250-0193 (JP)
(72) Inventor: Aoki, Yasuharu Fuji Photo Film Co., Ltd., Ashigarakami-gun Kanagawa 258-8538 (JP)
(74) Representative: Klunker . Schmitt-Nilson . Hirsch

(57) **Abstract**

According to an image conversion apparatus of the present invention, there is created the third image data (PostScript) file having the second layout having a page in which plural image objects are collected and arranged together, so that the plural image objects are rasterized once. This feature makes it possible to reduce the overheads at the time of the rasterizing and thereby improving the productivity of images as a system.

## Description

### BACKGROUND OF THE INVENTION

### Field of the Invention

The present invention relates to an image conversion apparatus for converting a format of image data by rasterizing the image data representative of a printing image over a plurality of pages, which consist of a plurality of image components and a definition of a layout of the plurality of image components, and an image conversion program storage medium storing an image conversion program, which causes an information processing apparatus to operate as the image conversion apparatus. Particularly, the present invention relates to an image conversion apparatus and an image conversion program storage medium storing an image conversion program suitable for dealing with image data for a variable printing.

### Description of the Related Art

As one of the standards of data formats representative of a variable printing, in which a part of the printed matter is substituted depending on a distribution destination, as it will be represented by a direct mail, there is known a PPML (Personalized Print Markup Language) (cf. non-patent reference "http: www.podi.org"). According to the PPML, a page is constituted of pluralities of image objects. According to the PPML, it is possible to declare reusable components on the assumption that the image objects are used a plurality of number of times, and thereby reducing the total amount of data in such a manner that a plotting pattern repeatedly used, for example, a regular form in a page, is established as the reusable component.

According to the general PPML processing system, a raster image, which is obtained through rasterizing image object data declared by a PPML description, is cached in temporal storage means so that the raster image objects are combined in accordance with the PPML description to create a raster image of a page.

A processing time in the PPML processing system, wherein a raster image, which is obtained through rasterizing image object data declared by a PPML description, is cached in temporal storage means so that the raster image objects are combined in accordance with the PPML description to create a raster image of a page, is the sum total of:
(1) the total of rasterizing times for image objects
(2) the total of times required for cache of the raster image
(3) the total of times required for the arrangement of the cached raster image on the page

Of the items (1), (2) and (3), the items (2) and (3) are substantially in proportion to the data amount of the raster image to be treated. Accordingly, in comparison of a case where a page is constituted of a large number of small image objects with a case where a page is constituted of a small number of large image objects, if the totals of the plotting areas of the image objects are the same as one another between both the cases, there is no large differences in processing time between both the cases. Thus, in order to reduce the total of the plotting areas of the image objects, it is advantageous that a page is constructed with the large number of small image objects.

However, a RIP (Raster Image Processor) for performing rasterizing is obliged to initialize the internal state whenever it creates a raster image. The initializing operation occurs whenever a page is changed, even if a PDL is in processing, of course, when a new PDL is processed. In addition, the time required for the initializing operation has no connection with the area of the page and is fixed overheads. The overheads occur by the number of pieces of image objects, and thus in the event that the number of image objects, which constitutes a page becomes large, productivity of a system will be extremely lowered.

### SUMMARY OF THE INVENTION

In view of the foregoing, it is an object of the present invention to provide an image conversion apparatus capable of reducing the overheads at the time of rasterizing and improving productivity of a system, and an image conversion program storage medium storing an image conversion program, which causes an information processing apparatus to operate as the image conversion apparatus.

To achieve the above-mentioned object, the present invention provides an image conversion apparatus that converts first image data representative of printing images over a plurality of pages, wherein the first image data consists of a plurality of image objects, and a definition of a layout of the plurality of image objects, into second image data which is rasterized and divided into pages, the image conversion apparatus comprising:
a first object arrangement section that creates third image data having a second layout having a page in which a plurality of image objects is arranged, the second layout being different from the layout of the image objects on the printing images, in accordance with the first image data;
a rasterizing processing section that creates fourth image data by rasterizing the third image data; and
a second object arrangement section that derives image objects after the rasterizing from the fourth image data and constructs the second image data in such a manner that the derived image objects arranged to meet a layout for each page of the printing images.

In the image conversion apparatus according to the present invention as mentioned above, it is preferable that the first object arrangement section further creates object information representative of arrangement positions of the plurality of image objects on the second layout, and layout information representative of arrangement positions of the plurality of image objects on the printing image, and
the second object arrangement section derives image objects after the rasterizing in accordance with the object information, and arranges the derived image objects in accordance with the layout information.

In the image conversion apparatus according to the present invention as mentioned above, it is preferable that the plurality of image objects comprises reusable objects that are used a plurality of number of times, and non-reusable objects that are used by only once, and the first image data is image data representative of a variable printing image over a plurality of pages, and
the first object arrangement section creates the third image data having the second layout, in which with respect to the reusable objects, one reusable object is arranged into a page, and with respect to the non-reusable objects, non-reusable objects included in every page of the variable printing image are collected together and arranged into one page.

To achieve the above-mentioned object, the present invention provides an image conversion program storage medium storing an image conversion program, which causes an information processing apparatus to operate as an image conversion apparatus that converts first image data representative of printing images over a plurality of pages, wherein the first image data consists of a plurality of image objects, and a definition of a layout of the plurality of image objects, into second image data which is rasterized and divided into pages, the image conversion apparatus comprising:
a first object arrangement section that creates third image data having a second layout having a page in which a plurality of image objects is arranged, the second layout being different from the layout of the image objects on the printing images, in accordance with the first image data;
a rasterizing processing section that creates fourth image data by rasterizing the third image data; and
a second object arrangement section that derives image objects after the rasterizing from the fourth image data and constructs the second image data in such a manner that the derived image objects arranged to meet a layout for each page of the printing images.

In the image conversion program storage medium storing an image conversion program according to the present invention as mentioned above, it is preferable that the first object arrangement section further creates object information representative of arrangement positions of the plurality of image objects on the second layout, and layout information representative of arrangement positions of the plurality of image objects on the printing image, and
the second object arrangement section derives image objects after the rasterizing in accordance with the object information, and arranges the derived image objects in accordance with the layout information.

In the image conversion program storage medium storing an image conversion program according to the present invention as mentioned above, it is preferable that the plurality of image objects comprises reusable objects that are used a plurality of number of times, and non-reusable objects that are used by only once, and the first image data is image data representative of a variable printing image over a plurality of pages, and
the first object arrangement section creates the third image data having the second layout, in which with respect to the reusable objects, one reusable object is arranged into a page, and with respect to the non-reusable objects, non-reusable objects included in every page of the variable printing image are collected together and arranged into one page.

### BRIEF DESCRIPTION OF THE DRAWINGS

Fig. 1 is a hardware structural view of a computer, which is used as an image conversion apparatus according to an embodiment of the present invention.
Fig. 2 is a typical structural view of an image conversion program stored in an image conversion program storage medium according to an embodiment of the present invention.
Fig. 3 is a block diagram of an image conversion apparatus according to an embodiment of the present invention.
Fig. 4 is a structural view of an overall system including a block structure of a variable printing processing apparatus, which is an embodiment of an image conversion apparatus of the present invention.
Fig. 5 is a view showing picture images of an object PDL file.
Fig. 6 is a view showing layout images of image objects defined by a PPML file.
Fig. 7 is a view showing object layout images in an object PS file.
Fig. 8 is a view showing contents of the first half of the PPML file describing that five objects "a" to "e" shown in Fig. 5 are arranged as shown in Fig. 6.
Fig. 9 is a view showing contents of the latter half of the PPML file describing that five objects "a" to "e" shown in Fig. 5 are arranged as shown in Fig. 6.
Fig. 10 is a view showing contents of an object PS file, which is created when a PPML interpreter section interprets the PPML files shown in Fig. 8 and Fig. 9.
Fig. 11 is a view showing object information, which constitutes internal information created in the process wherein the PPML interpreter section creates the object PS file shown in Fig. 10 through interpreting the PPML files shown in Fig. 8 and Fig. 9.
Fig. 12 is a view showing layout information, which constitutes internal information created in the process wherein the PPML interpreter section creates the object PS file shown in Fig. 10 through interpreting the PPML files shown in Fig. 8 and Fig. 9.
Fig. 13 is a flowchart useful for understanding a processing procedure in the PPML interpreter section.
Fig. 14 is a flowchart useful for understanding a PS description addition processing of the reusable objects.
Fig. 15 is a flowchart useful for understanding a processing of a PAGE element.
Fig. 16 is a flowchart useful for understanding a processing of a bit map synthesis section.

### DETAILED DESCRIPTION OF PREFERRED EMBODIMENTS

Embodiments of the present invention will be described with reference to the accompanying drawings.

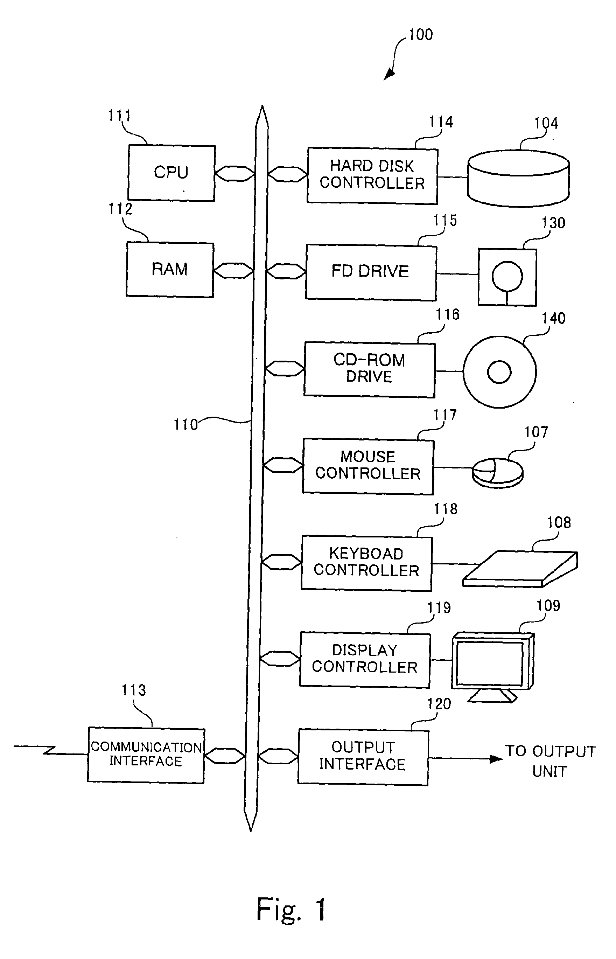

Fig. 1 is a hardware structural view of a computer, which is used as an image conversion apparatus according to an embodiment of the present invention.

A computer 100 shown in Fig. 1 comprises a CPU 111, a RAM 112, a communication interface 113, a hard disk controller 114, a flexible disk (FD) drive 115, a CD-ROM drive 116, a mouse controller 117, a keyboard controller 118, a display controller 119, and an output interface 120. These various types of elements are connected via a bus 110 to one another.

The hard disk controller 114 controls an access of a hard disk 104 that is incorporated in the computer 100. The FD drive 115 and the CD-ROM drive 116 control an access of a flexible disk (FD) 130 and a CD-ROM drive 140, which are detachably mounted on the computer 100, respectively. The mouse controller 117 and the keyboard controller 118 serve to detect operations of a mouse 107 and a keyboard 108, respectively, so that a result of the detection is transmitted to the CPU 111. The display controller 119 causes an image to be displayed on a display screen of a display 109 of the computer 100 in accordance with the instruction of the CPU 111.

The output interface 120 serves to transmit rasterized image data, which is processed in the computer 100, to an output apparatus of interest, which prints an image in accordance with the image data.

The communication interface 113 serves to perform a communication via all-purpose network such as Internet. The computer 100 receives image data via the communication interface 113.

The RAM 112 reads a program stored in the hard disk 104 to develop the program for the purpose of execution by the CPU 111. The CPU 111 reads the program developed in the RAM 112 and executes the same.

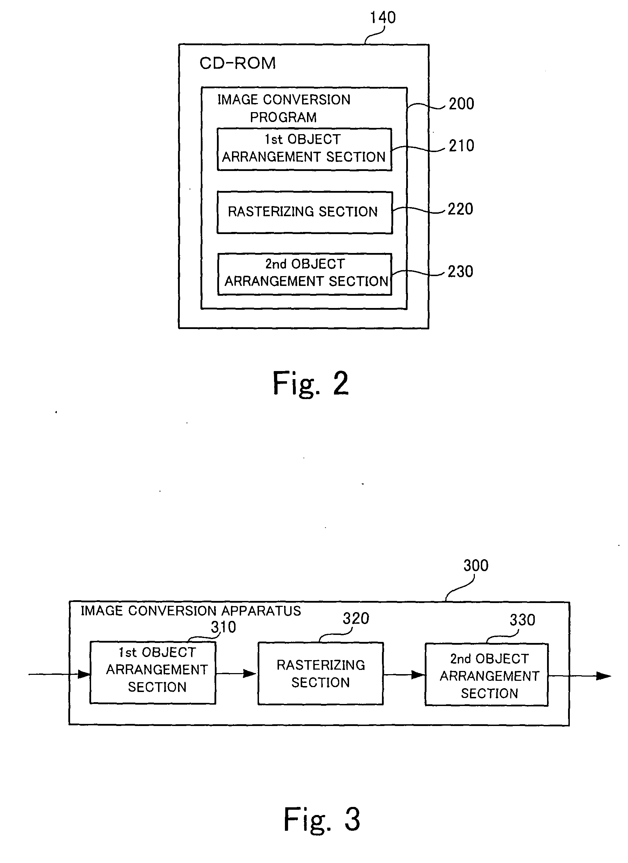

Fig. 2 is a typical structural view of an image conversion program stored in an image conversion program storage medium according to an embodiment of the present invention.

An image conversion program 200 is stored in the CD-ROM drive 140.

The image conversion program 200 comprises a first object arrangement section 210, a rasterizing section 220, and a second object arrangement section 210.

When the CD-ROM drive 140 shown in Fig. 2 is mounted on the computer 100 shown in Fig. 1 so as to be accessed by the CD-ROM drive 116, the image conversion program 200 stored in the CD-ROM drive 140 is up-loaded on the computer 100 and is stored in the hard disk 104. Thus, the image conversion program stored in the hard disk 104 is read from the hard disk 104 and is developed in the RAM 112. When the CPU 111 executes the developed image conversion program, the computer 100 operates as an image conversion apparatus according to an embodiment of the present invention.

There will be described later functions of the respective sections 210 to 230 constituting the image conversion program 200 shown in Fig. 2.

Fig. 3 is a block diagram of an image conversion apparatus according to an embodiment of the present invention.

An image conversion apparatus 300 shown in Fig. 3 comprises a first object arrangement section 310, a rasterizing section 320, and a second object arrangement section 330.

The image conversion apparatus 300 shown in Fig. 3 is constructed when the image conversion program 200 shown in Fig. 2 is installed in the computer 100 shown in Fig. 1 and is executed. The respective sections 310 to 330 constituting the image conversion apparatus 300 correspond to the combinations of the computer 100 shown in Fig. 1 and the respective sections 210 to 230 constituting the image conversion program 200 shown in Fig. 2, which is executed in the computer 100. When the image conversion program 200 shown in Fig. 2 is installed in the computer 100 shown in Fig. 1 and is executed, the functions of the respective sections 210 to 230 of the image conversion program 200 completely correspond to the respective sections 310 to 330 of the image conversion apparatus 300 shown in Fig. 3. Accordingly, the explanation of the respective sections 310 to 330 of the image conversion apparatus 300 shown in Fig. 3 serves as the explanation of the respective sections 210 to 230 of the image conversion program 200 shown in Fig. 2.

The image conversion apparatus 300 shown in Fig. 3 converts image data representative of a printed image over a plurality of pages, which comprises a plurality of image objects and definitions of layouts of the plurality of image objects, each of the definitions being described in the PPML, into image data which are rasterized and divided into pages.

The first object arrangement section 310 of the image conversion apparatus 300 creates a PS file having a second layout having a page wherein a plurality of image objects is arranged, in accordance with a definition (a PPML file) of the layout described in the PPML, the second layout being different from the layout on the variable printing image, that is, being different from the layout on the PPML file. To create the PS file, the first object arrangement section 310 creates a PS file having a layout in which with respect to the reusable object defined as an image object which is repeatedly plotted on the PPML file, one reusable object is arranged on a page, and having a layout in which with respect to the non reusable object that is not defined as an image object on the PPML file, the non reusable objects in a page on the PPML file are arranged together into a page. Further, the first object arrangement section 310 creates object information indicative of arrangement positions on the PS file of image objects described on the PPML file, and layout information indicative of arrangement positions on the PPML or the variable printing image, of image objects described on the PPML file, as well as the PS file.

The rasterizing section 320 of the image conversion apparatus 300 rasterizes the PS file created by the first object arrangement section 310.

The second object arrangement section 330 of the image conversion apparatus 300 extracts image objects after rasterizing corresponding to the image objects defined by the PPML file, from the image data obtained through rasterizing by the rasterizing section 320, so that the extracted image objects are arranged to conform to layouts every page on the variable printing image, or every page on the PPML file. As a result, the rasterized image data, which corresponds to each of the pages of the variable printing image, is constructed.

The second object arrangement section 330 extracts image objects after rasterizing from the image data obtained through rasterizing by the rasterizing section 320 in accordance with the object information created by the first object arrangement section 310. And the second object arrangement section 330 arranges the extracted image objects in accordance with the layout information created by the first object arrangement section 310.

According to the present embodiment, as described above, when a plurality of non reusable objects is arranged on a page of the PPML file, there is created a PS file in which the plurality of non reusable objects, which is arranged on a page of the PPML file, and the PS file is rasterized. Thus, according to the present embodiment, as compared with the prior art in which the image objects are rasterized one by one, it is possible to substantially reduce the overheads resulting from rasterizing, and thereby substantially improving productivity of image outputs.

Hereinafter, there will be explained the embodiment of the present invention more in detail.

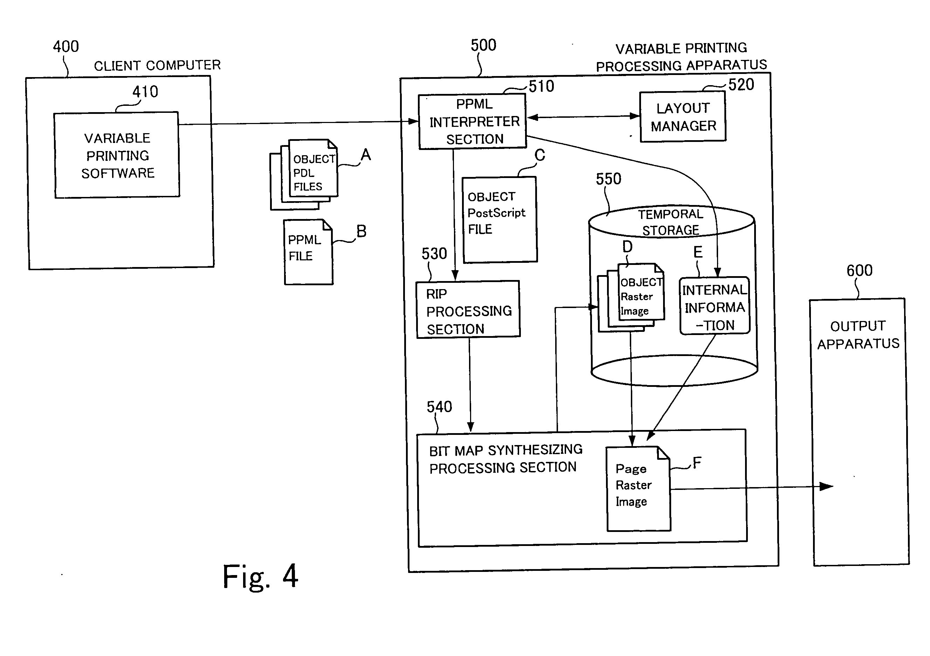

Fig. 4 is a structural view of an overall system including a block structure of a variable printing processing apparatus, which is an embodiment of an image conversion apparatus of the present invention.

A variable printing software 410, which is executed in a client computer 400, creates, upon receipt of printing instructions from an operator, an object PDL file A describing image objects constituting a printed matter and another data type of image files (here those files are represented by the object PDL file) representative of image objects, and a PPML file B defining a layout of the image objects, and transmits the created object PDL file and PPML file B via a network to a variable printing processing apparatus 500.

The variable printing processing apparatus 500 comprises a PPML interpreter section 510, a layout manager 520, a RIP processing section 530, a bit map synthesizing processing section 540, and a temporary storage section 550.

The PPML interpreter section 510 sequentially interprets the PPML file B transmitted from the client computer 400 from the first, and creates an object PS (postscript) file C that performs plotting of image objects constituting a page.

The layout manager 520 informs the PPML interpreter section 510 of arrangement positions of image objects on the object PS file C, and sizes of a page on the object PS file C in which the image objects are arranged, in accordance with inquiry from the PPML interpreter section 510, in process that the PPML interpreter section 510 interprets the PPML file B to creates the object PS file C.

The PPML interpreter section 510 creates an object PS file C while referring to the layout manager 520 and also creates internal information E. The object PS file C is transferred to the RIP processing section 530, and the internal information E is stored in the temporary storage section 550. The internal information E consists of object information representative of arrangement positions of image objects on the object PS file C, and layout information representative of arrangement positions of image objects on the PPML file B.

With respect to details of the processes of creating the object PS file C and the internal information E through interpretation of the PPML file B in the PPML interpreter section 510, it will be described later.

The RIP processing section 530 rasterizes the object PS file C created by the PPML interpreter section 510 to create rasterized image data. The rasterized image data is transmitted to the bit map synthesizing processing section 540.

In the PPML file B, image objects, which are repeatedly used, are defined as the reusable object. The bit map synthesizing processing section 540 refers to the internal information stored in the temporary storage section 550, upon receipt of the raster image data from the RIP processing section 530, to decide whether the received raster image data is reusable object or non reusable object that is not the reusable object. The reusable object is stored in the temporary storage section 550 in form of an object raster image file D.

The bit map synthesizing processing section 540 extracts, upon receipt of the raster image data of the non reusable object from the RIP processing section 530, the image objects from the raster image data of the non reusable object, and extracts raster image data necessary for synthesis of the page from the raster image data of the reusable object stored in the temporary storage section 550, so that the image objects of the raster image are rearranged in the arrangement positions stored in form of the layout information of the internal information. Thus, the bit map synthesizing processing section 540 creates a page raster image file F representative of a page of raster image.

Thus, when the bit map synthesizing processing section 540 creates the page raster image file F, the bit map synthesizing processing section 540 transmits the page raster image file F to an output apparatus 600, and cancels the raster image data of the non reusable objects.

The output apparatus 600 performs printing on a sheet in accordance with the page raster image file F transmitted from the variable printing processing apparatus 500.

Hereinafter, there will be explained an operation of the variable printing processing apparatus 500 more in detail.

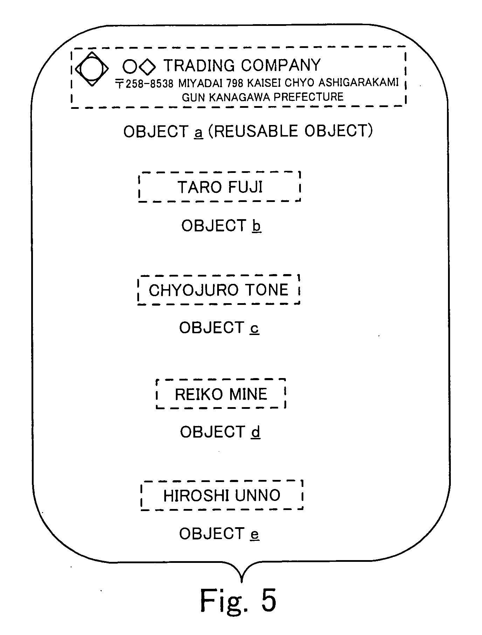

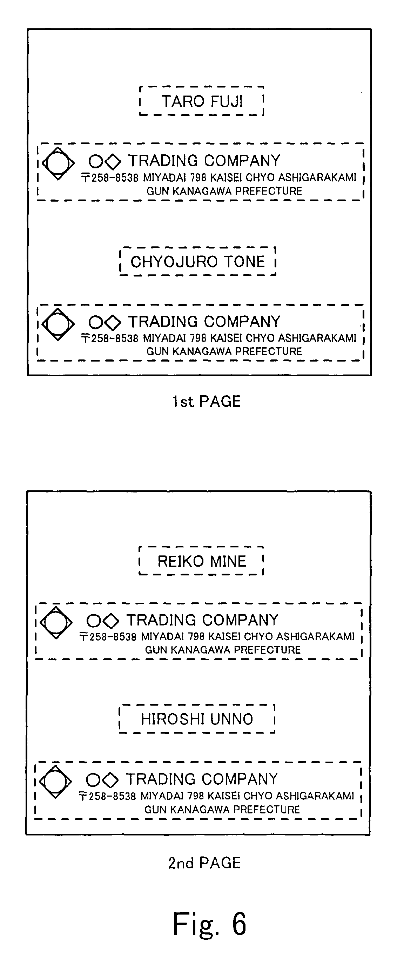

Fig. 5 is a view showing picture images of an object PDL file. Fig. 6 is a view showing layout images of image objects defined by a PPML file.

In Fig. 5 and Fig. 6, the picture images of the object PDL file and the layout images of image objects defined by the PPML file are images which are transmitted from the client computer 400 shown in Fig. 4 via the network to the variable printing processing apparatus 500, respectively.

According to the present embodiment, it is assumed that the client computer 400 transmits the PDL file A representative of five image objects (image objects a to e) shown in Fig. 5, and the PPML file B in which the layout of the five image objects is defined as shown in Fig. 6.

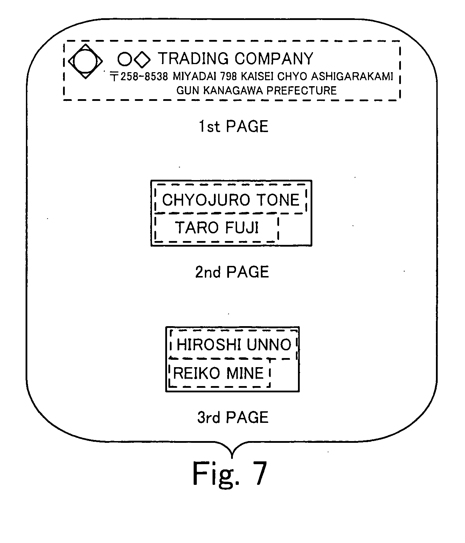

Fig. 7 is a view showing object layout images in the object PS file C, which is created in the PPML interpreter section 510 constituting the variable printing processing apparatus 500.

The object layout images shown in Fig. 7 are the object layout images of the object PS file C, which are created in such a manner that the PPML interpreter section 510 interprets the PPML file B in which the image objects a to e shown in Fig. 5 are arranged as shown in the object layout image shown in Fig. 6

According to the PPML file B, of five image objects a to e shown in Fig. 5, the image object a is defined as the reusable object. Further, according to the PPML file B, two pages of arrangement is defined. And as shown in Fig. 6, the image object a is repeatedly utilized over two pages. Of the five image objects a to e shown in Fig. 5, four image objects b to e except the image object a are non reusable objects. According to the PPML file B, as shown in Fig. 6, the image objects b to e are arranged one by one at anyone of two pages.

The PPML interpreter section 510 interprets the PPML file B in which the arrangement of the image objects a to e are defined as shown in Fig. 6, so that the PPML interpreter section 510 creates an object PS file C in which with respect to the reusable object a shown in Fig. 5, one page is constructed with only the reusable object a, and with respect to the non reusable objects b to e shown in Fig. 5, every page in the arrangement of the PPML file B shown in Fig. 6, the non reusable objects included in every page are collected together into one page. In other words, according to the present example, as shown in Fig. 7, in the object PS file C, regarding the reusable object a, one page is constructed with the reusable object a, regarding two non reusable objects b to c arranged on "first page" shown in Fig. 6, one page is constructed with the two non reusable objects b to c, and regarding two non reusable objects d to e arranged on "second page" shown in Fig. 6, one page is constructed with the two non reusable objects d to e.

According to the present example, there is raised only one reusable object a. However, in the event that a plurality of reusable objects exists, on the object PS file C, pluralities of reusable objects are arranged one by one on individual pages. Further, according to the present example, regarding the non-reusable objects, on the PPML file B shown in Fig. 6, two objects are arranged for every page. However, regarding the non reusable objects, a page of non reusable objects on the PPML file B is arranged on one page on the object PS file C, regardless of the number of the non reusable objects in pages on the PPML file B, and of variation in the number of the non reusable objects every page.

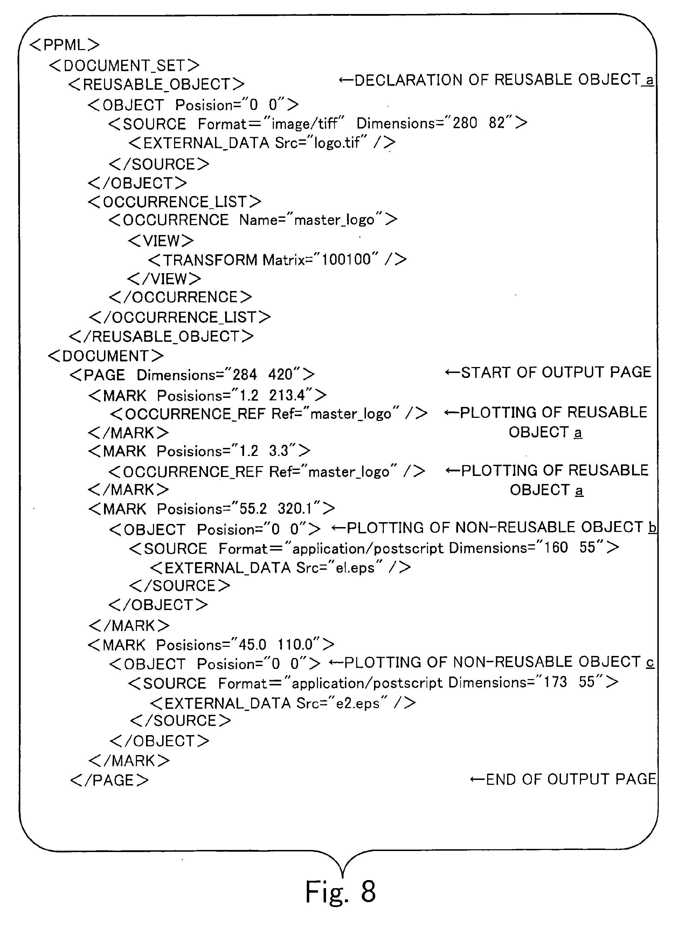

Fig. 8 is a view showing contents of the first half of the PPML file describing that five objects "a" to "e" shown in Fig. 5 are arranged as shown in Fig. 6.

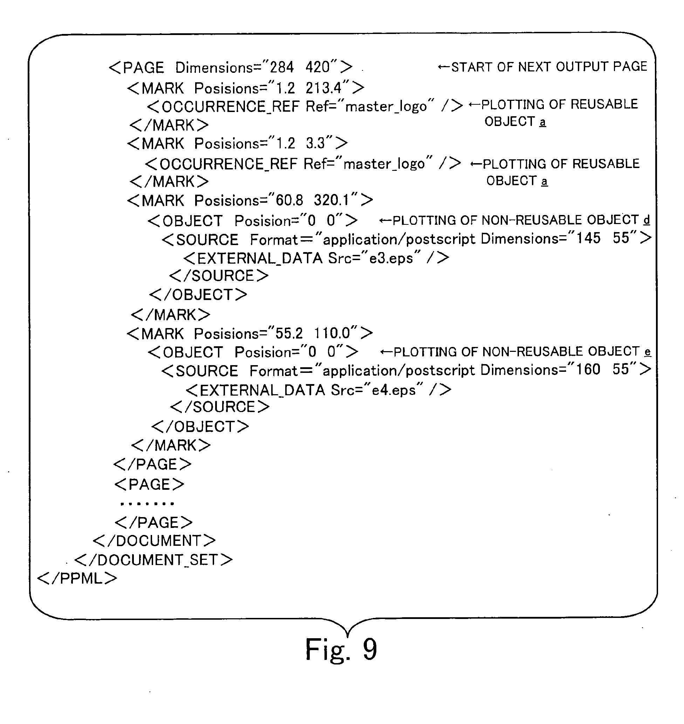

Fig. 9 is a view showing contents of the latter half of the PPML file describing that five objects "a" to "e" shown in Fig. 5 are arranged as shown in Fig. 6.

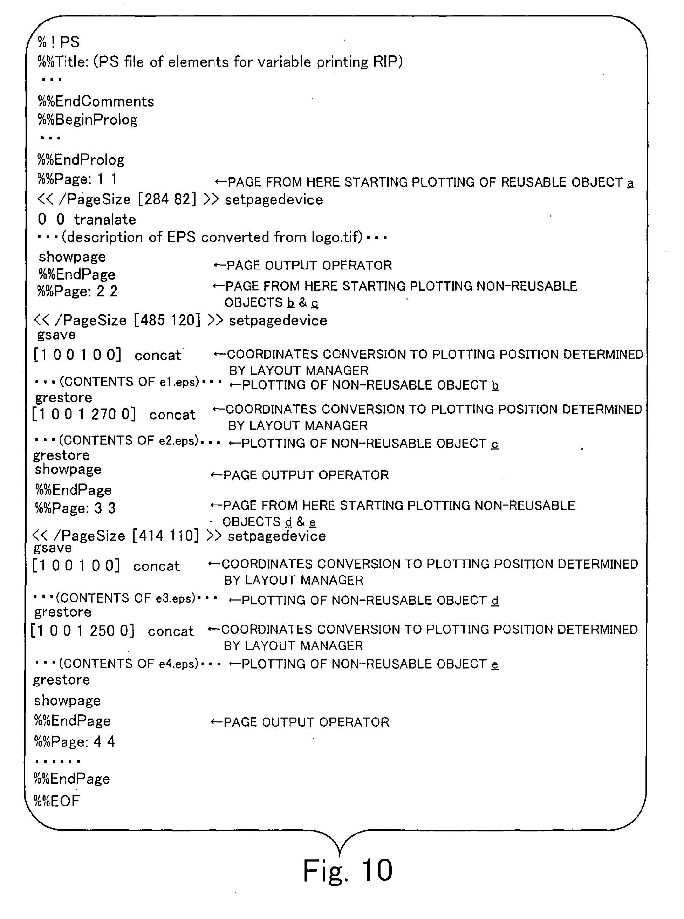

Fig. 10 is a view showing contents of an object PS file, which is created when a PPML interpreter section interprets the PPML files shown in Fig. 8 and Fig. 9.

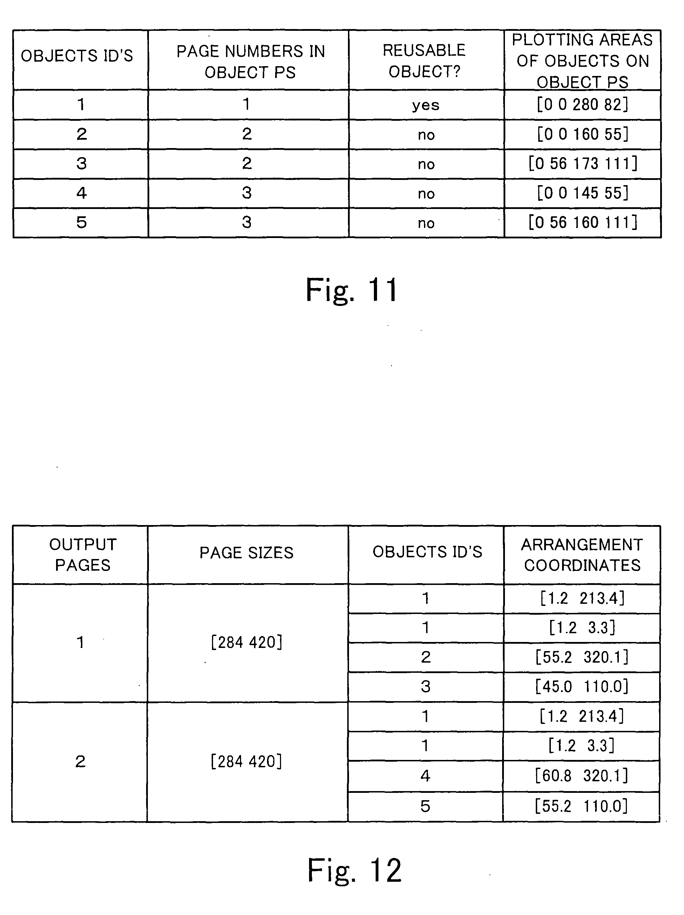

Fig. 11 is a view showing object information, which constitutes internal information created in the process wherein the PPML interpreter section creates the object PS file shown in Fig. 10 through interpreting the PPML files shown in Fig. 8 and Fig. 9.

Fig. 12 is a view showing layout information, which constitutes internal information created in the process wherein the PPML interpreter section creates the object PS file shown in Fig. 10 through interpreting the PPML files shown in Fig. 8 and Fig. 9.

The PPML file shown in Fig. 8 and Fig. 9, the object PS file shown in Fig. 10, and the internal information shown in Fig. 11 and Fig. 12 may be summarized as follows.

A REUSABLE_OBJECT element, which is written in a portion near the head of the PPML file shown in Fig. 8, is a declaration block of the reusable object. The reusable object is defined by the OBJECT element described in the declaration block. Here, it is defined that the reusable object is of "image/tiff" in format and of "080 82" in size, and the reusable object is concerned with a file addresses as a "logo. tiff" different from the PPML file. Further, it is defined in the PPML file that the reusable object is addressed as a "master_logo".

A PAGE element (the middle in Fig. 8 and the head in Fig. 9) of the PPML file is a declaration block of an output page. A MARK element of the PAGE element is an element for instructing plotting to page. An "OCCURRENCE_REF element of the MARK element instructs the reusable object defined above, so that the MARK is a plotting instruction of the reusable object. The OBJECT element of the MARK element is plotted with the MARK, and is an element instructing non-reusable object, which is non-reusable.

At the first page of the object PS file shown in Fig. 10, it is defined that the reusable object a ("logo. tiff") is to be plotted. And at the last of the page, there is disposed a page output operator "showpage". In a similar fashion to this, at the second page of the object PS file, it is defined that the that two non-reusable objects b and c are to be plotted at plotting positions, which are determined by the layout manager 520 (cf. Fig. 4), respectively. And at the last of the page, there is disposed a page output operator "showpage". At the third page of the object PS file, it is defined that two non-reusable objects d and e are to be plotted at plotting positions, respectively. And at the last of the page, there is disposed a page output operator "showpage".

As the object information shown in Fig. 11, which constitutes the internal information E shown in Fig. 4, on each of the object PS file shown in Fig. 10, there are shown: objects ID's, which are applied in order of appearing on the PPML file; page numbers in the object PS file, wherein image objects, to which the associated objects ID's are applied, respectively, are arranged; information as to whether the image objects, to which the associated objects ID's are applied, respectively, are the reusable object; and arrangement positions (plotting areas) of on the object PS file, of the image objects, to which the associated objects ID's are applied, respectively.

As the layout information shown in Fig. 12, which constitutes the internal information E shown in Fig. 4, there are shown layouts of the image objects on the PPML files shown in Fig. 8 and Fig. 9, or layouts of the image objects on the printed matter, which is finally obtained. More specifically, there are shown: output pages; sizes of the output pages; objects ID's, that specify the image objects to be outputted to the associated output pages, respectively; and arrangement positions (arrangement coordinates) of the image objects, to which the associated ID's are applied, respectively.

The object information show in Fig. 11 is linked with the layout information shown in Fig. 12 by the objects ID's.

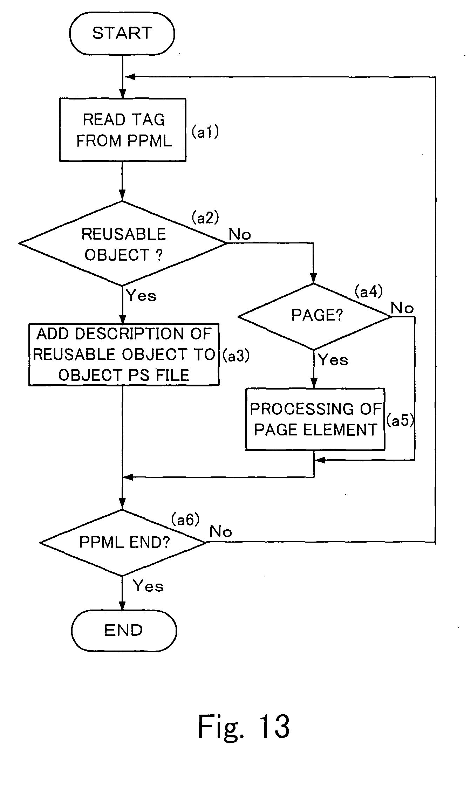

Fig. 13 is a flowchart useful for understanding a processing procedure in the PPML interpreter section 510 shown in Fig. 4.

The PPML interpreter section 510 sequentially interprets the PPML files B as exemplarily shown in shown in Fig. 8 and Fig. 9 from the top in the manner as set forth below, so as to create the object PS file C (cf. Fig. 10), which performs plotting of image objects constituting a page.

Here, first, a tag is read from the PPML file (step a1).

When the tag read in the step a1 is concerned with <REUSABLE_OBJECT> (step a2), a description of the reusable objects is added into the object PS file (step a3). When the tag read in the step a1 is concerned with <PAGE> (step a4), processing for the PAGE element, which will be described later, is carried out (step a5).

The PPML interpreter section 510 repeats this processing up to the last of the PPML file (step a6).

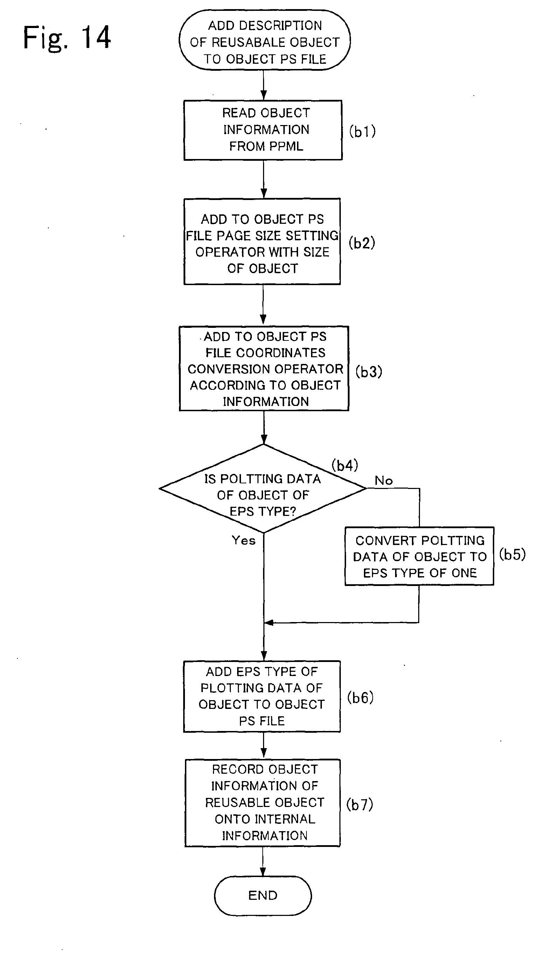

Fig. 14 is a flowchart useful for understanding a PS description addition processing of the reusable objects in the step a3 of Fig. 13.

Here, first, information of objects is read from the PPML file (step b1). A page size setting operator is added into the object PS file, with a size of the object thus read (step b2). And a coordinate conversion operator is added into the object PS file in accordance with the object information read from the PPML file (step b3). It is noted that the definition of the reusable object a of the PPML shown in Fig. 8 describes that the coordinate conversion is not carried out.

Next, it is decided as to whether plotting data of the object is an EPS type of plotting data (step b4). When it is decided that the plotting data of the object is not an EPS type of plotting data, the plotting data of the object is converted into an EPS type of plotting data (step b5). And an EPS type of plotting data thus converted is added into the object PS file (step b6). Further, in step b7, the object information of the reusable object is recorded onto the internal information E (cf. Fig. 4).

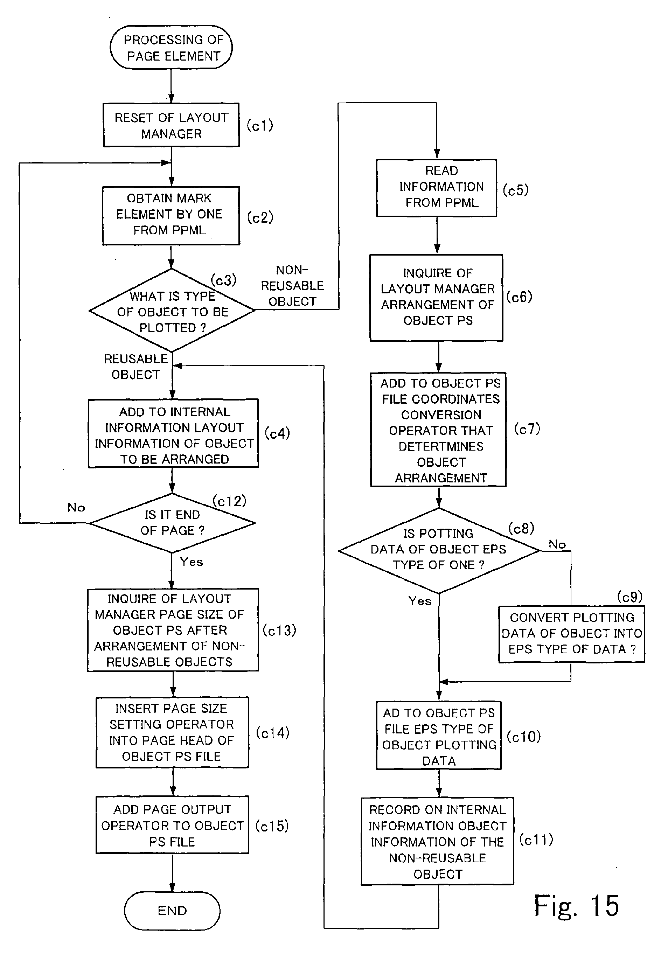

Fig. 15 is a flowchart useful for understanding a processing of the PAGE element in the step a5 in Fig. 13.

Here, first, the layout manager 520 (cf. Fig. 4) is reset (step c1), and one of the MARK elements is obtained from the PPML file (step c2). When there is found an OCCURRENCE_REF element in the block of the obtained MARK element, since the reusable object is described in the OCCURRENCE_REF element (step c3), the layout information (cf. Fig. 12) of the objects to be arranged is added into the internal information E (step c4). In step c12, it is decided as to whether the page is concerned with the end. When it is decided that the page is not concerned with the end, the procedure is returned to the step c2 in which next one of the MARK elements is obtained.

When there is found an OBJECT element in the block of the MARK element obtained in the step c2, since non-reusable object is described in the OBJECT element (step c3), the process goes to a step c5 in which there is read from the PPML file information of objects directly described in the block of the MARK element, or information of objects describing that the external file is to be referred to. In a step c6, inform the layout manager 520 of a size of the object, and inquire of the layout manager 520 a position of the object on the object PS file to be arranged. Upon receipt of the inquiry, the layout manager 520 decides a plotting area for the object of interest so as not to overlap with the plotting areas for other objects that are already arranged at the page on the object PS file, and returns arrangement position information of the object to the PPML interpreter section 510. Upon receipt of the arrangement position information from the layout manager 520, the PPML interpreter section 510 adds to the object PS file a coordinate conversion operator for determining the arrangement position for the object (step c7). When the plotting data of the objects to be arranged is not an EPS type of plotting data (step c8), it is converted into the EPS type of plotting data (step c9). And then the EPS type of plotting data is added into the object PS file (step c10).

In a step c11, the object information of the non-reusable object is recorded onto the internal information E, and the process goes to the step c4 in which the layout information (cf. Fig. 12) of the object is added into the internal information E.

When it is decided that the page is concerned with the end (the step c12), the process goes to a step c13. At this time point, since the layout manager 520 grasps information of a size of all the non-reusable objects of the page, the layout manager 520 can determine the page size of the page on the object PS file. In the step c13, inquire of the layout manager 520 the page size after the arrangement of all the non-reusable objects as to the page, on the object PS file. Upon receipt of the information as to the page size from the layout manager 520, insert the page size setting operator into the top of the page of the object PS file (step c14), and add the page output operator into the last of the page, of the object PS file (step c15).

In the manner as mentioned above, the PPML interpreter section 510 creates the object PS file C and the internal information E in cooperation with the layout manager 520 referring to the PPML file B.

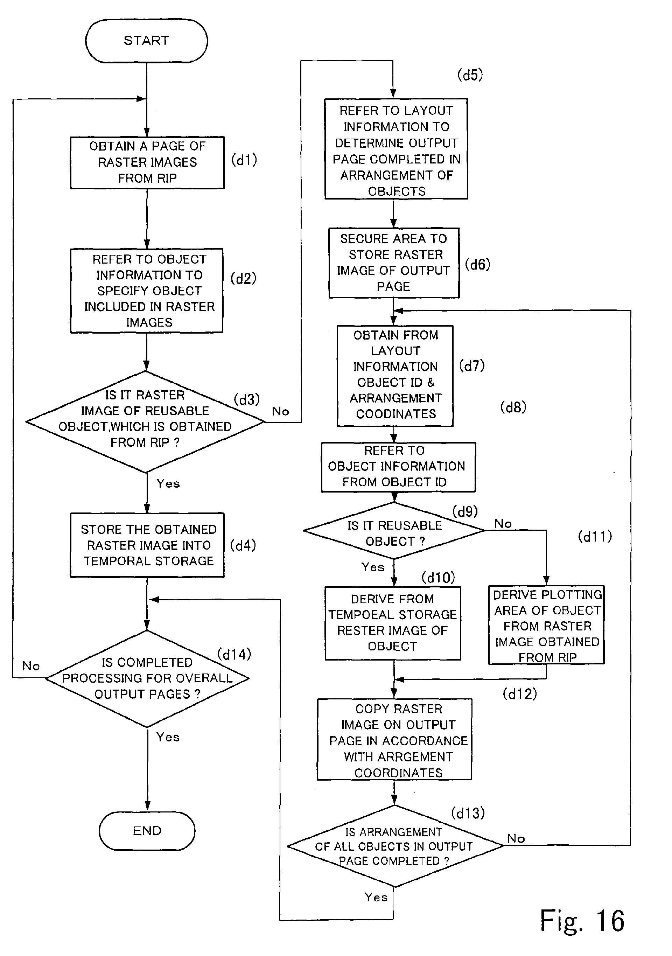

Fig. 16 is a flowchart useful for understanding a processing of a bit map synthesis section.

A bit map synthesis processing section 540 creates raster image data of an output page referring to object information (cf. Fig. 11) and layout information (cf. Fig. 12), which are created by the PPML interpreter section 510 in form of the internal information E.

The RIP processing section 530 interprets the object PS file C created by the PPML interpreter section 510 and creates raster image data of the image objects arranged on the object PS file C one by one page. At that time, the bit map synthesis processing section 540 obtains from the RIP processing section 530 the created raster image data and information indicative of which page of the object PS file the raster image data is concerned with.

The bit map synthesis processing section 540 also obtains, upon receipt of a page of raster image data from the RIP processing section 530 (step d1), from the RIP processing section 530 information indicative of which page of the object PS file the raster image data is concerned with, and specifies objects included in the received raster image data referring to the object information (cf. Fig. 11) wherein the information (first occurrence) is provided as an index (step d2). When the specified object is the reusable object (step d3), for the purpose of the use later, the raster image data is stored in a temporal storage 550 (step d4).

On the other hand, when the received raster image data is raster image data of the non-reusable object (step d3), the bit map synthesis processing section 540 refers to the layout information (cf. Fig. 12) and decides an output page completed in arrangement of objects (step d5). The PPML interpreter section 510 arranges all the non-reusable objects to be arranged on one output page on the PPML file, on the same page on the object PS file. Accordingly, the bit map synthesis processing section 540 can performs an output of a page wherein the objects are arranged, at the time of point that the raster image data of the non-reusable objects is obtained.

Here, first, in a step d6, there is secured an area on a memory to store an output page size of raster image data. Next, in a step d 7, there is obtained from the layout information (cf. Fig. 12) a set of an object ID and an arrangement coordinate of the object to be arranged at the output page. In a step d8, object information (cf. Fig. 11) is referred to from the obtained object ID. With respect to the reusable object (step d9), the raster image data of the object is derived from the temporal storage 550 (step d10). With respect to the non-reusable object (step d9), raster image data of the plotting area of the object is derived from the raster image data obtained from the RIP processing section 530 (step d11), so that the raster image data of the object is copied on the output page storage area, which is secured on the memory in the step d6, in accordance with the arrangement coordinates on the layout information (step d12).

Next, it is decided as to whether an arrangement of all the objects to be arranged in the output page is completed (step d13). When it is decided that any object to be arranged in the output page is yet remained, the process goes to the step d7 in which information of object ID and arrangement coordinates for the next object is obtained. On the other hand, in the step d13, when it is decided that an arrangement of all the objects to be arranged in the output page is completed, the process goes to the step d14 in which it is decided as to whether processing for all the output pages is completed. When it is decided that any output page to be processed yet is remained, the process returns to the step d1 to repeat the above mentioned all processing from the first. When the processing for all the output pages is completed (step d14), the processing is terminated.

When the bit map synthesizing processing section 540 completes the copy of the raster image data on all the objects constituting a page of output page (step d13), the bit map synthesizing processing section 540 transmits the raster image data of the completed output page to the output apparatus 600 and cancel the raster image data of the non-reusable object obtained from the RIP processing section 530 to obtain the next page from the RIP processing section 530.

Here, in case of the RIP for creating a plurality of plates of raster image data, which is subjected to process color separation on a page to match with an output apparatus for creating a color of printed matter from page data separated to process colors (usually, four colors of cyan, magenta, yellow, and black), according to the prior art scheme in which raster image data are individually created for each object and then combined, there is a need to cache once the raster image data even for the non-reusable object that is used only once.

There is a need that the same color plate data for all the objects are transmitted to the output apparatus on a layout basis. On the other hand, when a RIP creates raster image data for one object, the RIP creates all color plates of raster image data for the object. This is the reason why the synthesis of the raster image data on the output page is not completed until the raster image data for the last non-reusable object constituting the output page is obtained.

To the contrary, according to the present embodiment, plots of the non-reusable objects to be arranged at the same output page are collected to a page before transmission to the RIP processing section 530. Accordingly, according to the present embodiment, it is possible to initiate the synthesis of the raster image data of the color plate of the output page at the time point that rendering of the first color plate for the non-reusable objects is completed, and also it is possible to promptly cancel the color plates subjected to the rendering for the objects after synthesis. Thus, according to the present embodiment, it is possible to save memory capacity to be used for cache of raster image data, and also possible to reduce a lead time from the initiation of the RIP to the transmission of data to an output apparatus.

As mentioned above, according to the present invention, there is created the third image data (PostScript) file having the second layout having a page in which plural image objects are collected and arranged together, so that the plural image objects are rasterized once. This feature makes it possible to reduce the overheads at the time of the rasterizing and thereby improving the productivity of images as a system.

In the present invention, when the first object arrangement section creates the third image data consisting of the above-mentioned PS file and the like, there is constituted in such a manner that the first object arrangement section creates the object information and the layout information. This feature makes it possible for the second object arrangement section to constitute the second image data by means of simply referring to those types of information, without referring to and analyzing the first image data (for example, the PPML file) and the third image data (for example, the PS file), and thereby improving the conversion efficiency of the image data format.

In the conversion of the image data format for the variable printing, with respect to the reusable object, a page is constituted with one image object, and with respect to the non-reusable object, a page is constituted in such a way that the variable printing images are collected together into a page. This feature makes it possible that the page at the time of rasterizing is associated with the page of the variable printing images. Thus, just after the rasterizing of the non-reusable object of a certain page is terminated, it is possible to construct the second image data for the variable printing for the page, and thereby improving the conversion efficiency of the image data.

While the present invention has been described with reference to the particular illustrative embodiments, it is not to be restricted by those embodiments but only by the appended claims. It is to be appreciated that those skilled in the art can change or modify the embodiments without departing from the scope and sprit of the present invention.

## Claims

1. An image conversion apparatus that converts first image data representative of printing images over a plurality of pages, wherein the first image data consists of a plurality of image objects, and a definition of a layout of the plurality of image objects, into second image data which is rasterized and divided into pages, the image conversion apparatus comprising:
a first object arrangement section that creates third image data having a second layout having a page in which a plurality of image objects is arranged, the second layout being different from the layout of the image objects on the printing images, in accordance with the first image data;
a rasterizing processing section that creates fourth image data by rasterizing the third image data; and
a second object arrangement section that derives image objects after the rasterizing from the fourth image data and constructs the second image data in such a manner that the derived image objects arranged to meet a layout for each page of the printing images.

2. An image conversion apparatus according to claim 1, wherein the first object arrangement section further creates object information representative of arrangement positions of the plurality of image objects on the second layout, and layout information representative of arrangement positions of the plurality of image objects on the printing image, and
the second object arrangement section derives image objects after the rasterizing in accordance with the object information, and arranges the derived image objects in accordance with the layout information.

3. An image conversion apparatus according to claim 1, wherein the plurality of image objects comprises reusable objects that are used a plurality of number of times, and non-reusable objects that are used by only once, and the first image data is image data representative of a variable printing image over a plurality of pages, and
the first object arrangement section creates the third image data having the second layout, in which with respect to the reusable objects, one reusable object is arranged into a page, and with respect to the non-reusable objects, non-reusable objects included in every page of the variable printing image are collected together and arranged into one page.

4. An image conversion program storage medium storing an image conversion program, which causes an information processing apparatus to operate as an image conversion apparatus that converts first image data representative of printing images over a plurality of pages, wherein the first image data consists of a plurality of image objects, and a definition of a layout of the plurality of image objects, into second image data which is rasterized and divided into pages, the image conversion apparatus comprising:
a first object arrangement section that creates third image data having a second layout having a page in which a plurality of image objects is arranged, the second layout being different from the layout of the image objects on the printing images, in accordance with the first image data;
a rasterizing processing section that creates fourth image data by rasterizing the third image data; and
a second object arrangement section that derives image objects after therasterizing from the fourth image data and constructs the second image data in such a manner that the derived image objects arranged to meet a layout for each page of the printing images.

5. An image conversion program storage medium storing an image conversion program according to claim 4, wherein the first object arrangement section further creates object information representative of arrangement positions of the plurality of image objects on the second layout, and layout information representative of arrangement positions of the plurality of image objects on the printing image, and
the second object arrangement section derives image objects after the rasterizing in accordance with the object information, and arranges the derived image objects in accordance with the layout information.

6. An image conversion program storage medium storing an image conversion program according to claim 4, wherein the plurality of image objects comprises reusable objects that are used a plurality of number of times, and non-reusable objects that are used by only once, and the first image data is image data representative of a variable printing image over a plurality of pages, and
the first object arrangement section creates the third image data having the second layout, in which with respect to the reusable objects, one reusable object is arranged into a page, and with respect to the non-reusable objects, non-reusable objects included in every page of the variable printing image are collected together and arranged into one page.
